# EUROPÄISCHE PATENTSCHRIFT

(11) **EP 2 682 281 B1**
(45) Veröffentlichungstag und Bekanntmachung des Hinweises auf die Patenterteilung: **09.08.2017**
(21) Anmeldenummer: 13171333.1
(22) Anmeldetag: 11.06.2013
(51) Int. Cl.: B60C 9/20, B60C 9/00

(54) **Fahrzeugluftreifen**
Pneumatic tyres for a vehicle
Pneus de véhicule

(30) Priorität: 02.07.2012 DE 102012105846
(43) Veröffentlichungstag der Anmeldung: 08.01.2014
(73) Patentinhaber: Continental Reifen Deutschland GmbH, 30165 Hannover (DE)
(72) Erfinder: Ludwig, Reinhard, 31848 Bad Münder (DE); Volk, Heiner, 31535 Neustadt (DE); Kvasnica, Milan, 02001 Puchov (SK)
(74) Vertreter: Preusser, Andrea

(56) Entgegenhaltungen:
- EP-B1- 1 209 009
- JP-A- 2011 162 166

## Beschreibung

Die Erfindung betrifft einen PKW-Fahrzeugluftreifen in Radialbauart mit einem mehrlagigen Gürtel, wobei eine Gürtellage als Festigkeitsträger Monofilamente aus Stahl aufweist und wobei eine weitere Gürtellage radial außen oberhalb der vorgenannten Gürtellage angeordnet ist, welche als Festigkeitsträger Korde aufweist, wobei der Gürtel aus lediglich zwei Gürtellagen besteht, wobei die erste, radial innen angeordnete Gürtellage die Monofilamente aufweist, und wobei die Festigkeitsträger der zweiten Gürtellage Korde aus Stahl sind, welche einen Winkel β zwischen 0° und 10° mit der Umfangsrichtung des Fahrzeugluftreifens einschließen.

Ein derartiger Fahrzeugluftreifen mit einem zweilagigen Gürtel ist aus der JP 2011 162166 A bekannt. Die radial innen angeordnete erste Gürtellage weist Monofilamente als Festigkeitsträger auf, wobei die Monofilamente einen Winkel von 40° - 45° mit der Umfangsrichtung einnehmen.

Aus der EP 1 209 009 B1 ist zudem ein Fahrzeugluftreifen bekannt,, dessen Gürtel eine Gürtellage mit Monofilamenten und eine weitere Gürtellage mit Korden aufweist. Dieser Fahrzeugluftreifen weist eine erste und zweite Gürtellage auf, wobei die Festigkeitsträger dieser beiden Gürtellagen Monofilamente sind. Diese Monofilamente sind derart innerhalb der vorgenannten Gürtellagen angeordnet, dass sie einen Winkel zwischen 10° und 35° mit der Umfangsrichtung des Reifens einschließen. Abgedeckt sind die beiden Gürtellagen durch eine sogenannte Bandagenlage, welche als Festigkeitsträger organischen Faserkord aufweist, welcher in einem Winkel von 0° bis 5° in Bezug auf die Umfangsrichtung angeordnet ist.

Der Gürtel sorgt für die Steifigkeit der Reifenlauffläche in Umfangs- und Querrichtung und dient der Kraftübertragung, der Seitenführung und ist u.a. für den Abrieb des Reifens relevant.

Durch den Einsatz von Monofilamenten in Gürtellagen ist der Rollwiderstand gesenkt, denn die Monofilamente weisen einen geringeren Durchmesser als bisher eingesetzte, vergleichbare Korde auf. Die Gürtellage, welche aus gummierten Monofilamenten besteht, weist daher eine geringere Dicke als Gürtellagen mit Korden aus, welche aus miteinander verdrehten Filamenten bestehen. Es ist an Material und an Gewicht des Reifens eingespart, wodurch ein Vorteil in Bezug auf den Rollwiderstand des Reifens erreicht ist.

Bei der vorgenannten Gürtelkonstruktion nehmen die erste und die zweite Gürtellage zusammen etwa 80% der Umfangskraft des Reifens während seines Fahrbetriebes auf, während die Bandagenlage etwa 20% der Umfangskraft aufnimmt.

Es hat sich jedoch herausgestellt, daß die beschriebene Konstruktion mit zwei Monofilamentgürtellagen eine geringere Schräglaufsteifigkeit aufweist als vergleichbare Konstruktionen mit Korden, bei denen zwei oder mehr Filamente miteinander verseilt sind. Dies verschlechtert das Fahrverhalten (Handling) des Fahrzeugs.

"Schräglaufsteifigkeit" meint das Verhältnis von Seitenkraft zu Schräglaufwinkel, gemessen bei kleinen Schräglaufwinkeln von etwa 1 °.

Es ist daher die Aufgabe der Erfindung, einen Fahrzeugluftreifen bereitzustellen, der eine rollwiderstandsoptimierte Gürtelkonstruktion aufweist und bei dem gleichzeitig die Schräglaufsteifigkeit verbessert ist.

Die Aufgabe wird gelöst, indem die Monofilamente (4) der ersten Gürtellage (2) einen Winkel α von etwa 35° mit der Umfangsrichtung (UR) einschließen.

"Etwa" meint hier +/- 5°.
Eine Bandagenlage wird als Gürtellage betrachtet.

Durch diese vorgenannte Konstruktion ist einerseits der Rollwiderstand positiv beeinflusst, da der Gürtel (das Gürtelpaket) aus nur zwei Gürtellagen besteht und somit an Gewicht und Material gegenüber einer dreilagigen Gürtelkonstruktion eingespart ist. Durch die Verwendung von Monofilamenten in der radial inneren Gürtellage ist diese vergleichsweise dünn ausgelegt, es ist wenig Material verbaut und somit ist diese Gürtellage leicht an Gewicht.

Zudem ist weiterhin die maximale Schräglaufsteifigkeit erreicht. Die Monofilamente der ersten Gürtellage sind jeweils in einem Winkel von etwa 35° in Bezug auf die Umfangsrichtung angeordnet. Dieses ist sehr vorteilhaft für die Schräglaufsteifigkeit, da die Scherkräfte in dieser ersten Gürtellage, welche im Bereich der Gürtelkanten auftreten, am höchsten sind und dadurch die beste Kopplung zwischen den beiden Gürtellagen erreicht ist. Kopplung meint die Kraftübertragung von einer Gürtellage auf eine weitere Lage über die Scherung des dazwischenliegenden Gummies. Die beste Kopplung ist erreicht, wenn die Scherkräfte maximal sind durch Verwendung des effektivsten Koppelwinkels. Die verringerte Umfangssteifigkeit dieser ersten Gürtellage wird durch die zweite, radial äußere Gürtellage, welche Stahlkorde in etwa in Umfangsrichtung verlaufend aufweist, kompensiert.

Bei der Gürtelkonstruktion des erfindungsgemäßen Reifens nimmt die erste Gürtellage etwa 20% der Umfangskraft des Reifens während seines Fahrbetriebes auf, während die zweite Gürtellage etwa 80% der Umfangskraft aufnimmt. Vorteil dieser Ausführung ist, daß bei Geradeauslauf nur eine geringe Kopplung beziehungsweise Scherkraft zwischen den Gürtellagen benötigt wird. Erst bei Kurvenfahrt wird die Ankopplung der ersten Winkellage an den zweiten Gürtel notwendig und die Scherkräfte bilden sich aus.

"Axial" meint eine Richtungsangabe, die parallel zur Drehachse des Fahrzeugluftreifens verläuft.
"Monofilament" meint einen Festigkeitsträger, der aus einem einzigen Filament (linienförmiges Element beliebiger Länge) besteht.
"PKW-Fahrzeugluftreifen" meint PKW- und Van-Fahrzeugluftreifen.
"Erste Gürtellage" meint diejenige Gürtellage des Gürtelpakets, die radial innen innerhalb des Gürtelpakets angeordnet ist.
"Zweite Gürtellage" meint die radial äußerste Gürtellage des Gürtelpakets.

In einer Weiterbildung der Erfindung ist vorgesehen, dass die Festigkeitsträger der zweiten Gürtellage Korde aus HE-Stahl sind. HE-Stahlkord meint, dass der Stahlkord bei niedriger Dehnung bis 1% nur geringe Kräfte (zirka 20N bis 50N je Kord) aufbaut und eine Erhebung des Reifens in die Heizform erlaubt.

In einer Weiterbildung der Erfindung ist vorgesehen, dass die Festigkeitsträger der zweiten Gürtellage einen Winkel zwischen 0° und 5°, vorzugsweise zwischen 0° und 2° mit der Umfangsrichtung des Fahrzeugluftreifens einschließen. In dieser Anordnung ist eine besonders gute Aufnahme der Umfangskräfte durch die zweite Gürtellage ermöglicht.

Die Erfindung wird nun anhand einer einzigen Figur, die ein schematisches Ausführungsbeispiel darstellt, näher erläutert.

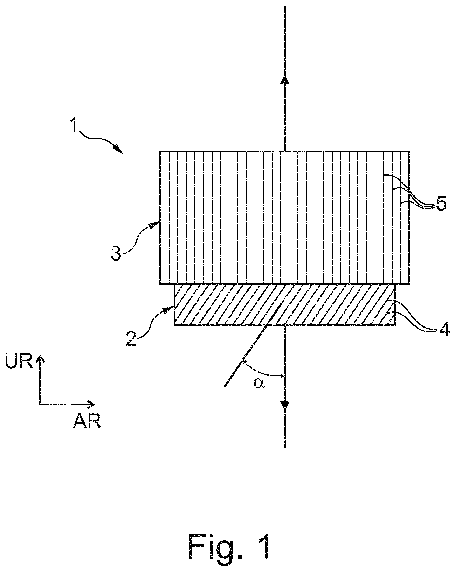

Die Fig. 1 zeigt eine Aufsicht auf das Gürtelpaket 1 (gleichbedeutend mit "Gürtel") eines PKW-Luftreifens. Die Gürtellagen 2, 3 sind derart dargestellt, dass die Gummierungsschicht abgedeckt ist und die Festigkeitsträger freigelegt sind.

Die wesentlichen Bauteile, aus welchen sich ein PKW-Fahrzeugluftreifen, welcher das dargestellte Gürtelpaket 1 aufweist, zusammensetzt, sind: ein profilierter Laufstreifen, ein aus einer ersten Gürtellage 2, einer zweiten Gürtellage 3 bestehendes Gürtelpaket 1, eine einlagig oder alternativ zweilagig ausgeführte Karkasse, eine weitgehend luftdicht ausgeführte Innenschicht, Wülste mit Wulstkernen und Kernprofilen, sowie Seitenwände. Die Karkasse kann in herkömmlicher und bekannter Weise ausgeführt sein und somit in eine Gummimischung eingebettete, in radialer Richtung verlaufende Verstärkungsfäden aus einem textilen Material oder aus Stahlkord aufweisen. Die Karkasse ist um die Wulstkerne von innen nach außen geführt, ihre Hochschläge verlaufen neben den Wulstkernprofilen in Richtung Gürtelpaket 1.

Die erste Gürtellage 2 besteht aus in eine Gummimischung eingebetteten Monofilamenten 4 aus Stahl, welche parallel zueinander verlaufen. Die Monofilamente 4 der ersten Gürtellage 2 schließen mit der Reifenumfangsrichtung (UR) jeweils einen Winkel α zwischen 25° und 45°, vorzugsweise einen Winkel α von 35° ein. Die Monofilamente 4 weisen einen runden Querschnitt mit einem Durchmesser von 0,25 mm bis 0,5 mm, vorzugsweise von 0,35mm auf. Die erste Gürtellage 2 ist radial innen angeordnet, während die zweite Gürtellage 3 radial außen auf der ersten Gürtellage 2 aufliegt. Die zweite Gürtellage 3 deckt die erste Gürtellage 2 vollständig ab. Die Festigkeitsträger der zweiten Gürtellage 3 sind Stahlkorde 5, welche einen Winkel β zwischen 0° und 10°, hier etwa 0° mit der Umfangsrichtung (UR) des Fahrzeugluftreifens einschließen. Der Stahlkord 5 weist die Konstruktion 3 x 4 x 0,2 mm auf.

### Liste der Bezugszeichen

- 1: Gürtelpaket
- 2: Erste Gürtellage
- 3: Zweite Gürtellage
- 4: Monofilament
- 5: Stahlkord

- UR: Umfangsrichtung
- aR: axiale Richtung

## Patentansprüche

1. PKW-Fahrzeugluftreifen in Radialbauart mit einem mehrlagigen Gürtel (1), wobei eine Gürtellage als Festigkeitsträger Monofilamente (4) aus Stahl aufweist und wobei eine weitere Gürtellage (3) radial außen oberhalb der vorgenannten Gürtellage (2) angeordnet ist, welche als Festigkeitsträger Korde aufweist,
wobei der Gürtel aus lediglich zwei Gürtellagen (2, 3) besteht, wobei die erste, radial innen angeordnete Gürtellage (2) die Monofilamente (4) aufweist, und wobei die Festigkeitsträger der zweiten Gürtellage (3) Korde (5) aus Stahl sind, welche einen Winkel β zwischen 0° und 10° mit der Umfangsrichtung (UR) des Fahrzeugluftreifens einschließen, **dadurch gekennzeichnet, dass** die Monofilamente (4) der ersten Gürtellage (2) einen Winkel α von etwa 35° mit der Umfangsrichtung (UR) einschließen.

2. Fahrzeugluftreifen nach Anspruch 1,
**dadurch gekennzeichnet, dass** die Festigkeitsträger der zweiten Gürtellage (3) Korde (5) aus HE-Stahl.

3. Fahrzeugluftreifen nach einem oder mehreren der vorangehenden Ansprüche,
**dadurch gekennzeichnet, dass** die Korde (5) der zweiten Gürtellage (3) einen Winkel β zwischen 0° und 5°, vorzugsweise zwischen 0° und 2° mit der Umfangsrichtung (UR) des Fahrzeugluftreifens einschließen.

## Claims

1. Pneumatic car tyre of a radial type of construction with a multi-ply breaker belt (1), one belt ply comprising steel monofilaments (4) as reinforcing elements and a further belt ply (3) that comprises cords as reinforcing elements being arranged radially outside above the aforementioned belt ply (2), the breaker belt consisting just of two belt plies (2, 3), the first, radially inwardly arranged belt ply (2) comprising the monofilaments (4), and the reinforcing elements of the second belt ply (3) being steel cords (5), which form an included angle β of between 0° and 10° with the circumferential direction (UR) of the pneumatic vehicle tyre, **characterized in that** the monofilaments (4) of the first belt ply (2) form an included angle α of approximately 35° with the circumferential direction (UR).

2. Pneumatic vehicle tyre according to Claim, 1,
**characterized in that** the reinforcing elements of the second belt ply (3) cords (5) of HE steel.

3. Pneumatic vehicle tyre according to one or more of the preceding claims,
**characterized in that** the cords (5) of the second belt ply (3) form an included angle β of between 0° and 5°, preferably between 0° and 2°, with the circumferential direction (UR) of the pneumatic vehicle tyre.

## Revendications

1. Pneumatique de véhicule de tourisme de type de construction radiale avec une ceinture (1) à plusieurs couches ;
une couche de ceinture comportant comme éléments de renforcement des monofilaments (4) en acier et une couche de ceinture (3) supplémentaire étant disposée dans le plan radial à l'extérieur au-dessus de ladite couche de ceinture (2) et comportant comme éléments de renforcement des câbles, la ceinture se composant seulement de deux couches de ceinture (2, 3), la première couche de ceinture (2) disposée à l'intérieur dans le plan radial comportant les monofilaments (4) et les éléments de renforcement de la deuxième couche de ceinture (3) étant des câbles (5) en acier formant un angle β compris entre 0° et 10° par rapport à la direction périphérique (UR) du pneumatique de véhicule ;
**caractérisé en ce que** les monofilaments (4) de la première couche de ceinture (2) forment un angle α d'approximativement 35° par rapport à la direction périphérique (UR).

2. Pneumatique de véhicule selon la revendication 1, **caractérisé en ce que** les éléments de renforcement de la deuxième couche de ceinture (3) des câbles (5) en acier HE.

3. Pneumatique de véhicule selon l'une quelconque des revendications précédentes ou plusieurs d'entre elles, **caractérisé en ce que** les câbles (5) de la deuxième couche de ceinture (3) forment un angle β compris entre 0° et 5°, de préférence entre 0° et 2°, par rapport à la direction périphérique (UR) du pneumatique de véhicule.
